# EUROPEAN PATENT APPLICATION

(11) **EP 4 454 946 A1**
(43) Date of publication of application: **30.10.2024**
(21) Application number: 23170887.6
(22) Date of filing: 29.04.2023
(51) Int. Cl.: B60Q 1/04, B60Q 1/26

(54) **FIXING DEVICE FOR A LIGHTING DEVICE FOR A VEHICLE**

(71) Applicant: Valeo Vision, 93012 Bobigny Cedex (FR)
(72) Inventor: KWIECIEN, Grzegorz, 32500 Chrzanow (PL); WOJCIK, Bartosz, 32500 Chrzanow (PL); PILARSKI, Bartlomiej, 32500 Chrzanow (PL)
(74) Representative: Valeo Visibility

(57) **Abstract**

The invention relates to a fixing device (1) for a lighting device (3) for a vehicle (2), wherein said fixing device (1) comprises :
- an expandable ring (10) with an internal diameter,
- a ring holder (11) that is configured to hold said expandable ring (10),
- a pusher (12) that is configured to take a first position where it is in contact with said expandable ring (10), said expandable ring (10) being at rest, and a second position where it pushes onto said expandable ring (10) so as to increase the internal diameter of said expandable ring (10).

## Description

The present invention relates to a fixing device for a luminous device for a vehicle. Such a fixing device may be used, but not exclusively, in the automotive domain.

In the automotive domain, a fixing device for a lighting for a vehicle, well-known by the person skilled in the art, comprises three fixing points to fix the lighting device onto a body of the vehicle.

In order to obtain a good appearance on the vehicle, the lamp needs to be mounted flush the body of the vehicle. However, when the lighting device is fixed as known by the three fixing points, one problem is that it may lead to some misalignment between the vehicle's body outer surface and the lighting device's front surface.

It is an object of the invention to provide a fixing device for a lighting device for a vehicle, particularly an automotive vehicle, which solves the above-stated problem.

To this end, it is provided a fixing device for a lighting device for a vehicle, wherein said fixing device comprises :
- an expandable ring with an internal diameter,
- a ring holder that is configured to hold said expandable ring,
- a pusher that is configured to take a first position where it is in contact with said expandable ring, said expandable ring being at rest, and a second position where it pushes onto said expandable ring so as to increase the internal diameter of said expandable ring.

As it will be seen further in details, the fixing device allows blocking the lighting device into a position relative to the vehicle's body so that the lighting device's front surface is flush with the vehicle's body outer surface. In other words, by using this fixing device it is possible to obtain a good alignment between both surfaces.

It is to be noted that all the characteristics of the present description, described for lighting device, can be applied more generally to a luminous device for a vehicle, such as a front lamp or a headlamp or a rear lamp, performing for example one or several lighting and/or signaling functions.

According to non-limiting embodiments of the invention, the fixing device in accordance with the invention further comprises the following characteristics.

The internal diameter is variable; it increases when the pusher pushes on the expandable ring.

In a non-limiting embodiment, said ring holder comprises legs and said pusher comprises recesses or apertures configured to receive said legs.

In a non-limiting embodiment, said pusher comprises ribs and said ring holder comprises apertures configured to receive said ribs.

In a non-limiting embodiment, said pusher has an external diameter that is greater than the internal diameter of said expandable ring when said expandable ring is at rest.

In a non-limiting embodiment, said pusher comprises a rib configured to push onto said expandable ring when the pusher is in said second position.

In a non-limiting embodiment, said pusher comprises a hole configured to receive a screw. The screw is attached to a body of the vehicle.

In a non-limiting embodiment, said ring holder comprises a hole configured to receive a screw, notably the same screw as for the pusher.

In a non-limiting embodiment, said expandable ring further comprises a slot that allows the expandable ring to expand.

There is also provided a lighting device for a vehicle, said lighting device comprising :
- a housing,
- a fixing leg that extends from said housing, said fixing leg comprising a hole, and
- a fixing device of the present invention inserted into said hole, wherein said lighting device is configured to be fixed to a body of said vehicle by means of a screw that is configured to cooperate with a nut, and to be hold into position by means of said fixing device.

In a non-limiting embodiment, the hole of said leg comprises an internal surface arranged in a direction parallel to an axis along which the fixing device extends.

There is also provided a vehicle with a body and a screw attached to said body, wherein said vehicle comprises a lighting device of the present invention.

There is also provided a mounting method for fixing a lighting device to a body of a vehicle, said lighting device comprising a fixing device of the present invention, wherein said mounting device comprises :
- assembling the expandable ring and the ring holder to a housing of said lighting device, said expandable ring being positioned around said ring holder,
- assembling the pusher to the assembly comprising the expandable ring and the ring holder,
- inserting a screw attached to said vehicle's body into a hole of the pusher,
- moving the housing of said lighting device relatively to the vehicles' body so as to obtain a desired gap between a front surface of said lighting device and an outer surface said vehicle's body,
- positioning a nut on top of the pusher and screwing said nut onto said screw so that the pusher pushes onto said expandable ring in order to increase the internal diameter of said expandable ring and so as to block the lighting device into position.

Some embodiments of methods and/or apparatus in accordance with embodiments of the present invention are now described, by way of example only, and with reference to the accompanying drawings, in which:
Figure 1 illustrates a vehicle an exploded view of a fixing device for a lighting device for a vehicle, said fixing device comprising an expandable ring, a ring holder and a pusher, according to a non-limiting embodiment of the invention,
Figure 2 illustrates the expandable ring of said fixing device of figure 1, according to a non-limiting embodiment,
Figure 3 illustrates the ring holder of said fixing device of figure 1, according to a non-limiting embodiment,
Figure 4 illustrates the pusher of said fixing device of figure 1, according to a non-limiting embodiment,
Figure 5 illustrates the expandable ring of figure 2 arranged around the pusher of figure 4, according to a non-limiting embodiment,
Figure 6 illustrates the pusher of figure 4 assembled with the ring holder of figure 3, according to a non-limiting embodiment,
Figure 7 illustrates an assembly view of the fixing device of figure 1, according to a non-limiting embodiment,
Figure 8 illustrates a sectional view of the fixing device of figure 7, to a non-limiting embodiment,
Figure 9 illustrates a lighting device comprising the fixing device of figure 1, said lighting device being fixed to a vehicle's body by means of said fixing device, according to a non-limiting embodiment,
Figure 10 illustrates a zoomed sectional view of the fixing device of figure 1 fixing said lighting device of figure 9 to the vehicle's body, according to a non-limiting embodiment,
Figure 11 illustrates a fixing leg of said lighting device of figure 9, said fixing leg comprising a hole, according to a non-limiting embodiment,
Figure 12 illustrates a sectional view of the hole of the fixing leg of figure 9, where a fixing device of figure 1 is inserted, according to a non-limiting embodiment,
Figure 13 illustrates is a zoomed view of the expandable ring of the fixing device of figure 12 which cooperates with the hole of the fixing leg of figure 9, according to a non-limiting embodiment,
Figure 14 is a schematic diagram of a top view of the lighting device of figure 9 with the fixing device of figure 1, whose pusher is in a first position, according to a non-limiting embodiment,
Figure 15 is a schematic diagram of a top view of the lighting device of figure 9 with the fixing device of figure 1, whose pusher is in a second position, according to a non-limiting embodiment,
Figure 16 illustrates the first and second steps of mounting method for fixing the lighting device of figure 9 to a vehicle's body by means of the fixing device of figure 1, according to a non-limiting embodiment,
Figure 17 illustrates the third, fourth and fifth steps of the mounting method of figure 16.

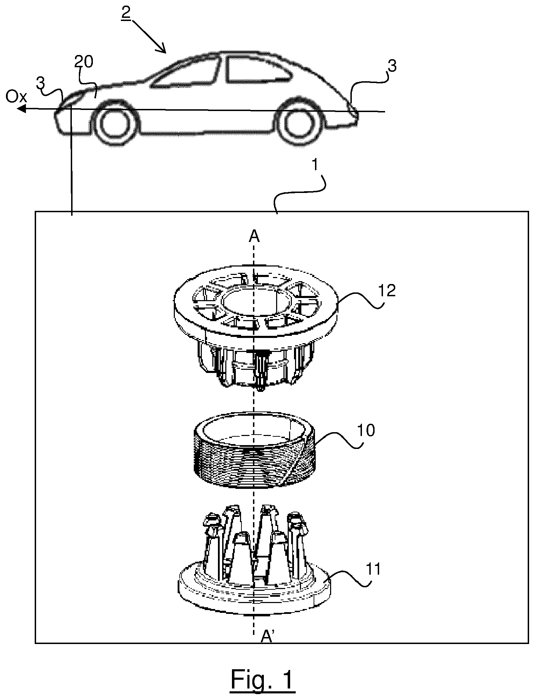

The present invention relates to a fixing device 1 for a lighting device 3 for a vehicle 2, said fixing device 1 being described in reference to figures 1 to 15, according to non-limiting embodiments. In a non-limiting embodiment, said vehicle 2 is an automobile vehicle. It has a body referred to as 20 with an outer surface. The body is also called car body 20 in the following. For simplicity, the outer surface is referred to as 200. The vehicle longitudinal axis Ox is illustrated in figure 1.

As illustrated in figure 1, the fixing device 1 comprises :
- an expandable ring 10,
- a ring holder 11,
- a pusher 12.

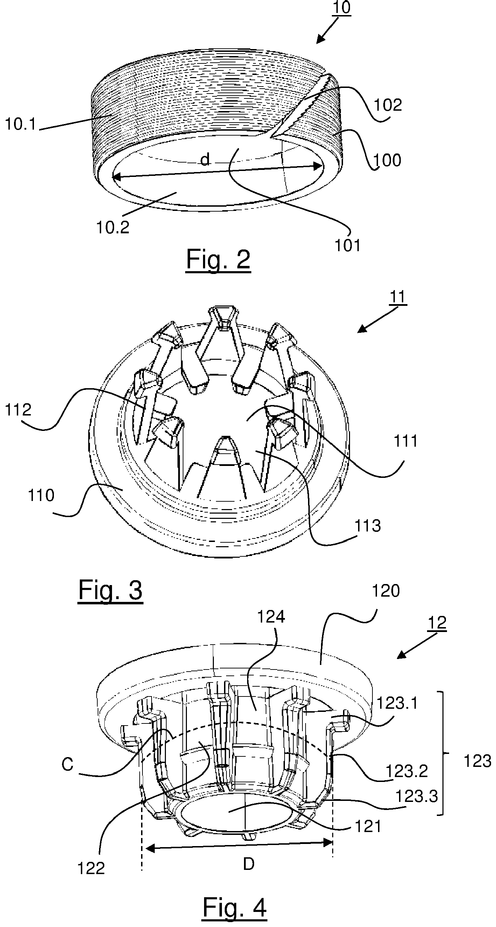

The fixing device 1 extends along an axis A-A' called longitudinal axis A-A' illustrated in figure 1. The expandable ring 10 comprises a hole 101 through which the ring holder 11 can be inserted. In other words the expandable ring 10 is configured to be mounted around the ring holder 11. The expandable ring 10 has an inner surface 10.2 limiting the hole 101, and an outer surface 10.1 opposite to the inner surface. The expandable ring 10 has an internal diameter d, defined by the inner surface 10.2, smaller than an external diameter D of the pusher 12 when the expandable ring 10 is at rest. The internal diameter d is variable. It increases when the pusher 12 pushes on the expandable ring 10. The inner surface 10.2 defines as well an internal perimeter. The expandable ring 10 illustrated in figure 2 further comprises a plurality of stripes 100 arranged on the outer surface 10.1.

In a non-limiting embodiment illustrated in figure 2, the expandable ring 10 comprises a slot 102 that allows the expandable ring 10 to expand. The slot extend along the complete height of the ring, the height corresponding to the dimension extending in the direction of the longitudinal axis A-A'.

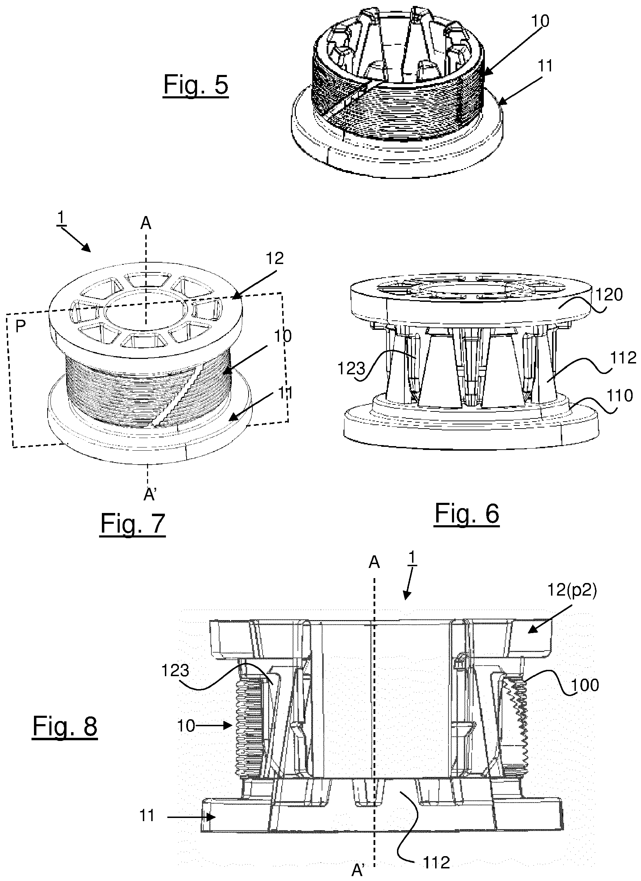

The ring holder 11 illustrated in figure 3 is configured to hold the expandable ring 10 as illustrated in figure 5. As illustrated in figure 3, it comprises a hole 111 configured to receive a screw 22. It further comprises a base 110 from which several legs 112 extend. The base 110 is substantially flat and the legs 112 extend substantially perpendicularly to said base 110. The base 110 forms a ring around the hole 111, and the legs 112 are distributed, advantageously regularly distributed, all around the base. When the ring holder 11 and the expandable ring 10 are assembled, the legs 112 extend in a direction perpendicular to the direction of the stripes 100 of the expandable ring 10. In the non-limiting example of figure 3, there are eight legs 112. However, another number of legs 112 is possible. Advantageously there are more than three legs 112, as it allows the expandable ring 10 to be held with a good stability by the ring holder 11. The external perimeter formed by the legs 112 is smaller than the internal perimeter of the expandable ring 10, even when the expandable ring 10 is at rest, so that this latter can be mounted around said legs 112 as illustrated in figure 5. Said external perimeter formed by the legs 112 is the perimeter of a cylindrical surface of revolution, having the axis A-A' as revolution axis, and passing through the surface of each leg 112 opposite to the hole 111.

The legs 112 of the ring holder 11 are configured to be inserted in some respective apertures 122 (illustrated in figure 4) of the pusher 12 as illustrated in figure 6 when all the elements of the fixing device 1 are assembled. The legs 112 of the ring holder 11 may then be in contact with a base 120 of the pusher 12. The ring holder 11 further comprises apertures 113, each formed between two successive legs 112 as illustrated in figure 3. The apertures 113 are configured to receive ribs 123 (illustrated in figure 4) of the pusher 12. In the non-limiting example of figure 3, there are eight apertures 113. The number of apertures 113 is the same as the number of legs 112.

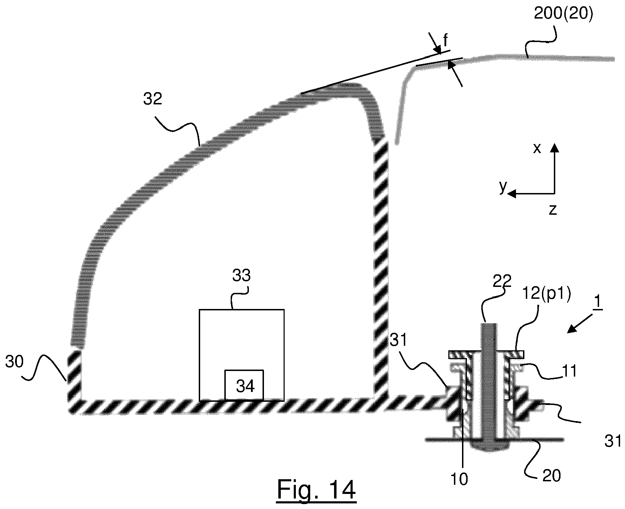

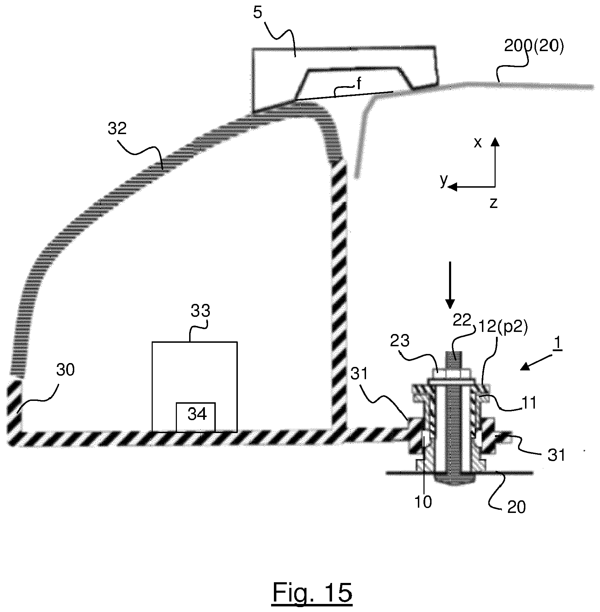

The pusher 12 is configured to take :
- a first position p1 (illustrated in figure 14) where it is in contact with said expandable ring 10 said expandable ring 10 being at rest, and;
- a second position p2 (illustrated in figure 15) where it pushes onto said expandable ring 10 so as to increase the internal diameter d of said expandable ring 10 so as to expand said expandable ring 10.

In the first position p1 illustrated in figure 14, the expandable ring 10 is not under any constraint. It is at rest. The pusher 12 just rests on the expandable ring 10 and is in contact with the expandable ring 10. In the second position p2 illustrated in figure 15, the expandable ring 10 is under constraint as the pusher 12 pushes against it to expand it. The pusher 12 goes from the first position p1 to the second position p2 when a nut 23 (illustrated in figure 15) is screwed onto the screw 22 attached to the car body 20 of the vehicle 2.

As illustrated in figure 4, the pusher 12 comprises a hole 121 configured to receive the screw 22 attached to the car body 20. It further comprises a base 120 from which a plurality of ribs 123. The base 120 is substantially flat and the ribs 123 extend substantially perpendicularly to said base 120. The base 120 forms a ring around the hole 121, and the ribs 123 are distributed, advantageously regularly distributed, all around the base. The regular distribution ensures a good repartition of the action of the ribs when they push on the expandable ring.

In a non-limiting example, there are eight ribs 123. Advantageously, the number of ribs 123 is equal to the number of apertures 113 of the ring holder 11. The ribs 123 are arranged each in a direction parallel to the axis A-A'. The ribs 123 are arranged on the periphery of a cylinder of revolution 124 which longitudinal axis is the axis A-A'. In a non-limiting embodiment, the ribs 123 are regularly distributed around the cylinder 124.

When the nut 23 is screwed onto the screw 22, the ribs 23 come into contact with the expandable ring 10 and push onto the expandable ring 10. The dimensions of the ribs 123 are such that they push on to the expandable ring 10 so as to expand said expandable ring 10 when the pusher 12 is in the second position p2. In a non-limiting embodiment, all the ribs 123 have the same dimensions.

Each rib 123 comprises a foot 123.1 configured to be in contact with the base 120 of the pusher 12, a contact surface 123.2 configured to be in contact with the expandable ring 10 when the pusher 12 is in the second position p2, and a chamfered part 123.3 for helping the introduction of the pusher 12 into the expandable ring 10. The external diameter D of the pusher 12 is defined by a circle C contained in a perpendicular plane of axis A-A' and that takes support on the contact surface 123.2.

The pusher 12 further comprises apertures 122, each formed between two successive ribs 123 where legs 112 of the ring holder 11 can be inserted as illustrated in figure 6. In a non-limiting embodiment, some of the apertures 122, or all of them, are replaced by recesses.

The ribs 123 are configured to be inserted in the apertures 112 of the ring holder 112 and as illustrated in figure 6 to be in contact with the base 110 of the ring holder 11 when all the elements of the fixing device 1 are assembled. Each rib 123 is inserted in a respective aperture 112.

Figure 7 and figure 8 illustrate the fixing device 1 when all its elements, i.e. the expandable ring 10, the ring holder 11, and the pusher 12 are assembled together and when the pusher 12 is in the second position p2. Figure 8 illustrates a sectional view along a plan P which contains the axis A-A' as illustrated in figure 7.

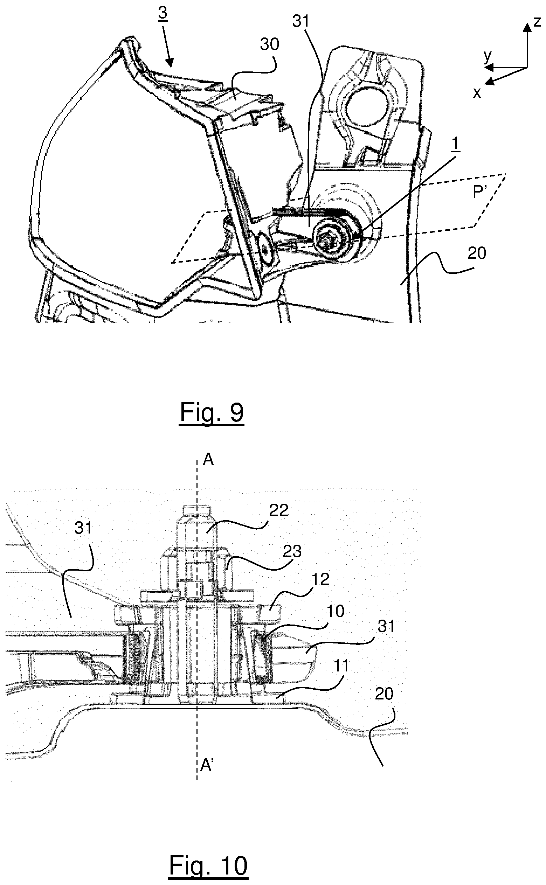

As illustrated in figure 9, the fixing device 1 is a fixing device 1 for a lighting device 3. It allows to mount the lighting device 3 onto the car body 20 of the vehicle 2, and more particularly to align the lighting device 3 with the car body 20 so as to have a desired gap f (illustrated in figure 14 and figure 15) between a front surface 32 of the lighting device 3 and an outer surface 200 of the car body 20, and to block said lighting device 3 into position when the desired gap f is reached, as explained in the following.

In non-limiting embodiments, the lighting device 3 is a front lamp or a headlamp or a rear lamp. In non-limiting embodiments, the lighting device 3 is configured to perform an optical function that is lighting and/or signaling.

The lighting device 3 comprises :
- a housing 30 with a fixing bracket 31 also called fixing leg 31 (illustrated in figures 9, 10, 14 and 15),
- a front surface 32 (illustrated in figure 14 and 15). In a non-limiting embodiment, the front surface 32 is an external surface of an outer lens that closes the housing 30. The front surface 32 can be view from an observer positioned in front of the lighting device 3.

The lighting device 3 further comprises one or a plurality optical modules 33 (illustrated in figures 14 and 15) with one or a plurality of light sources 34 (illustrated in figures 14 and 15). In the non-limiting example illustrated, only one optical module 33 with on light source 34 is illustrated.

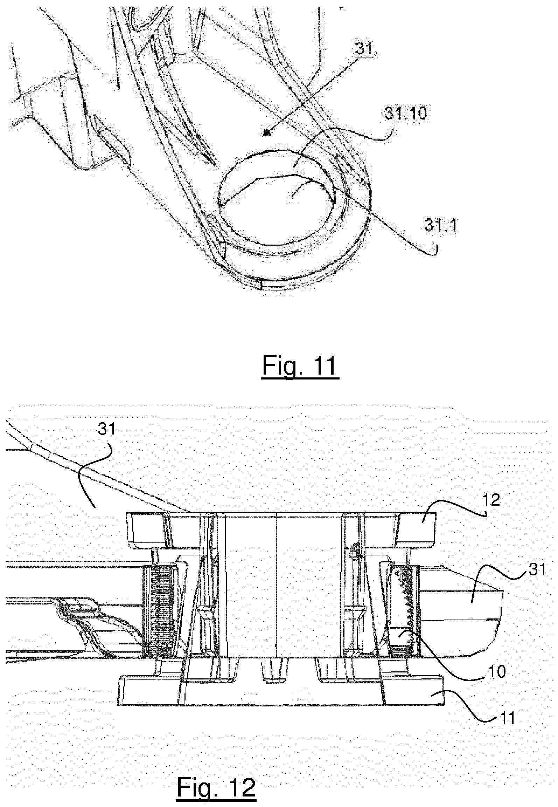

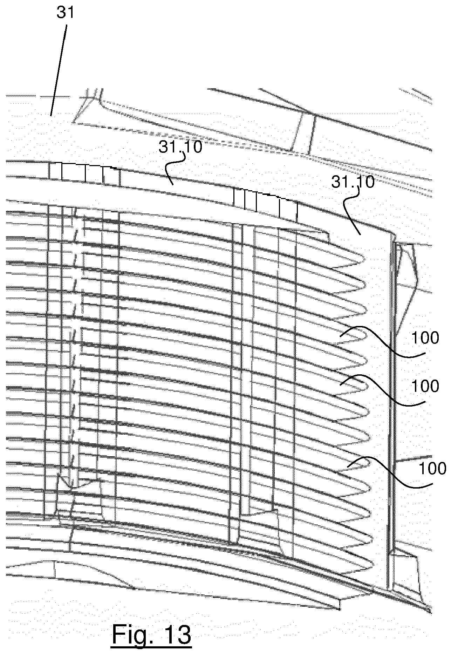

The fixing leg 31 illustrated in figure 11 extends from the housing 30 and comprises a hole 31.1 configured to receive the fixing device 1 and to support said fixing device 1. The fixing device 1 is inserted within said hole 31.1. as illustrated in figure 12. In a non-limiting embodiment illustrated in figure 11 and figure 13, the hole 31.1 comprises an internal surface 31.10 arranged in a direction parallel to the axis A-A'. The direction of each stripe 100 is perpendicular to the longitudinal axis A-A'.

The lighting device 3 is configured to be fixed to the car body 20 of the vehicle 2 and to be hold into position by means of the fixing device 1, the screw 22 attached to the car body 20 of the vehicle 2, and the nut 23, as illustrated in figure 10. The sectional view is along a plane P' (illustrated in figure 9) which contains the axis A-A'. More in details, when the nut 23 is screwed on the screw 22, the pusher 12 takes the second position p2 and pushes onto the expandable ring 10. The expandable ring 10 presses on the internal surface 31.10 of the hole 31.1 of the fixing leg 31.

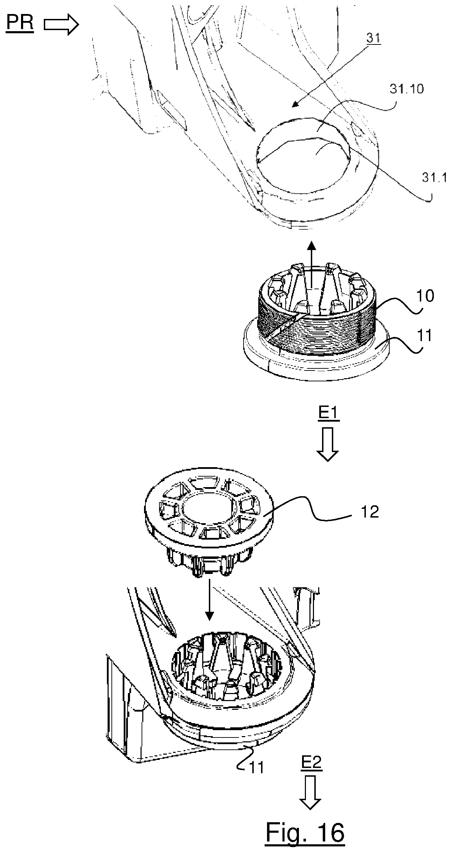

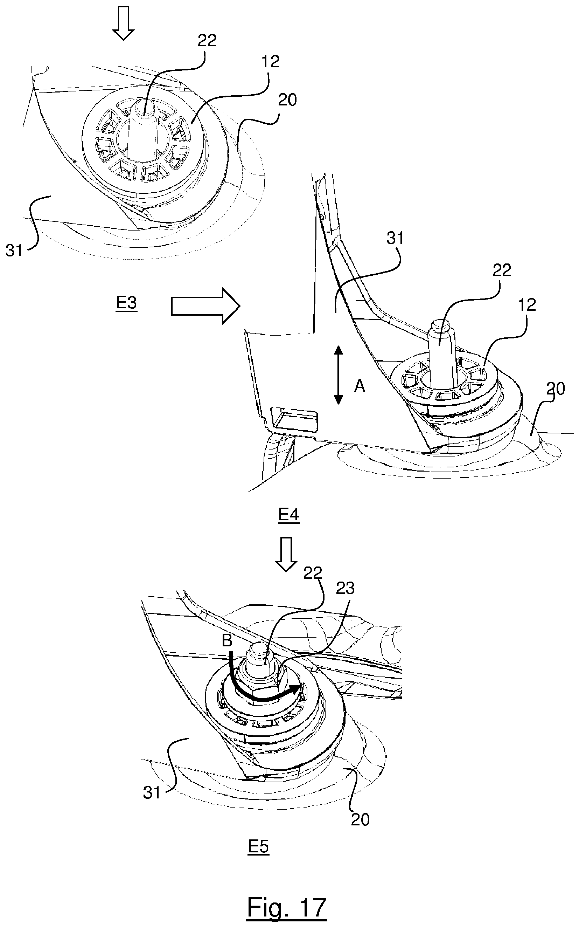

The lighting device 3 is mounted onto the car body 20 of the vehicle 2 according to the following mounting method PR illustrated in figures 16 and 17.

The mounting method PR comprises the following steps.

After positioning the expandable ring 10 of the fixing device 1 around the ring holder 11 of the fixing device 1 so that this latter supports it, in step E1 illustrated in figure 16, the expandable ring 10 and the ring holder 11 are assembled to the housing 30 by means of the fixing leg 31. More particularly, the ring holder 11 with the expandable ring 10 are inserted within the hole 31.1 of the fixing leg 31. The expandable ring 10 is around the ring holder 11 and is at rest. It is not exposed to any constraint. The assembly of the ring holder 11 and the expandable ring 10 can move relative to the fixing leg 31 along the axis x which is an optical axis (that is relatively parallel to the vehicle axis Ox). The fixing leg 31 is not yet hold and maintained in position by the fixing device 1 as it is free to move. It should be noted that the axis A-A' is a mounting axis for the fixing device 1.

In step E2, the pusher 12 is positioned into contact with the expandable ring 10, so as to be assembled with the assembly of the ring holder 11 and the expandable ring 10.

It is to be noted that the lighting device 3 equipped with the whole assembly of the expandable ring 10, the ring holder 11, the pusher 12, inserted into the hole 31.1 of the leg 31, is sent to the customer.

In step E3 illustrated in figure 17, the screw 22 is inserted into the hole 121 of the pusher 12 and the pusher 12 is in the first position p1. More precisely, as the screw 22 is fixed to the car body 20 of the vehicle 2, the assembly of the expandable ring 10, the ring holder 11, the pusher 12 and the leg 31, is moved so that the screw is inserted through the hole 121. It has to be noted that the screw is inserted as well through the hole 111 of the ring holder 11, and through the hole 101 of the ring 10. The expandable ring 10 is still at rest. The fixing leg 31 is still not yet held and maintained in position by the fixing device 1 as it is free to move.

In step E4 illustrated in figure 17, the housing 30 of the lighting device 3 with the assembly of the expandable ring 10, the ring holder 11, the pusher 12 and the leg 31 is moved relatively to the car body 20 of the vehicle 2 along the axis x so as to obtain a desired gap f between a front surface 32 of said lighting device 3 and said the outer surface 200 of the car body 20. The movement is illustrated by the arrow A. The step E4 is also illustrated in figure 14. In the non-limiting example illustrated in figure 14, the gap f is such that the front surface 32 is not yet aligned with the outer surface 200. It is noted that the housing 30, and therefore the fixing leg 31, are moved manually or with a tool. When the desired gap f is reached, the lighting device 3 is maintained manually or with the tool into position until the fixing device 1 is fixed onto to the car body 20 as follows. In a non-limiting embodiment, the desired gap is obtained when the front surface 32 is flush with the outer surface 200.

In step E5 illustrated in figure 17, a nut 23 is positioned on top of the pusher 12 and is screwed onto said screw 22 so as to come into contact with the base 120 of the pusher 12 and to push on the pusher 12 which takes the second position p2 where it pushes onto said expandable ring 10 in order to increase the internal diameter d of said expandable ring 10 and so as to block the lighting device 3 into position. The arrow B illustrates the screwing of the nut 23 onto the screw 22.

The displacement of the pusher 12 from its first position p1 to its second position p2 is done along the axis x.

During the displacement of the pusher 12 from its first position p1 to its second position p2, its ribs 123 move inside the respective apertures 113 of the ring holder 11 until they reach the base 110 of the ring holder 11, and the legs 112 of the ring holder 11 move inside the respective apertures 122, or recesses as described above, of the pusher 12 until they reach the base 120 of the pusher 12. In a non-limiting embodiment, the displacement from the position p1 to the second position p2 is of around 4 millimeters. In a non-limiting embodiment, the movement is stopped before the ribs 123 of the pusher 12 reach the base 110 of the ring holder 11, and before the legs 112 of the ring holder 11 reach the base 120 of the pusher 12.

When the pusher 12 goes to its second position p2, its ribs 123 push onto the inner surface 10.2 of the expandable ring 10 so as to exert a constraint on the expandable ring 10 and so as to increase the internal diameter d of the expandable ring 10. The expandable ring 10 is therefore under constraint and it expands radially. In the section visible in figures 14 and 15, it is along the y direction.

When the internal diameter d of the expandable ring 10 increases, the expandable ring 10 presses on the inner surface of the hole 31.1 of the fixing leg 31 which maintains the fixing leg 31 into the position chosen for the desired gap f. Hence, it creates a permanent connection between the fixing device 1 and the fixing leg 31 of the housing 30 due to internal friction between the ring 11 and the inner surface of the hole 31.1, and to the radial forces.

Moreover, in a non-limiting embodiment, when the internal diameter d of the expandable ring 10 increases, the expandable ring 10 is deformed and its stripes 100 come into contact with the internal surface 31.10 of the hole 31.1 of the fixing leg 31. The stripes 100 grip on the internal surface 31.10 of the hole 31.1. In a non-limiting embodiment, they

It is to be noted that in a non-limiting embodiment, an alignment tool 5 illustrated in figure 15 can be used to determine the desired gap f, and therefore to help for the positioning of the housing 30. This alignment tool 5 can be fixed to an RPS (Reference point system) point of the housing 30. The step E5 is also illustrated in figure 15. In the non-limiting example illustrated in figure 15, the gap f is reduced to zero, such that the front surface 32 is now aligned with the outer surface 200, i.e. the front surface 32 is flush with the outer surface 200. When the lighting device 3 is mounted onto the car body 20, the alignment tool 5 is disassembled from the lighting device 3.

It is to be noted that in another non-limiting embodiment, the steps of the mounting method PR can be in a different order. Hence, after positioning the expandable ring 10 of the fixing device 1 around the ring holder 11 of the fixing device 1 so that this latter supports it, in step E1 the expandable ring 10 and the ring holder 11 are assembled to the car body 20 of the vehicle 2. The screw 22 attached to said vehicle's body 20 passes through the expandable ring 10 and the ring holder 11. Then, in step E2, the housing 30 is assembled to the assembly expandable ring 10-ring holder 11 via the fixing leg 31. The screw 22 passes through the hole 31.1 of the fixing leg 31. In step E3, the pusher 12 is then assembled to the assembly expandable ring 10-ring holder 11. Then, steps E4 and E5 are performed as described before.

It is to be understood that the present invention is not limited to the aforementioned embodiments and variations and modifications may be made without departing from the scope of the invention. In this respect, the following remarks are made. All statements herein reciting principles, aspects, and embodiments of the invention, as well as specific examples thereof, are intended to encompass equivalents thereof.

Hence, some embodiments of the invention may comprise one or a plurality of the following advantages:
- it permits to have a desired gap between a front surface 32 of the lighting device 3 and an outer surface 200 of the car body 20,
- it is a simple solution,
- it allows to compensates potential tolerances of form of the car body 20.

## Claims

1. Fixing device (1) for a lighting device (3) for a vehicle (2), wherein said fixing device (1) comprises :
- an expandable ring (10) with an internal diameter (d),
- a ring holder (11) that is configured to hold said expandable ring (10),
- a pusher (12) that is configured to take a first position (p1) where it is in contact with said expandable ring (10), said expandable ring (10) being at rest, and a second position (p2) where it pushes onto said expandable ring (10) so as to increase the internal diameter (d) of said expandable ring (10).

2. Fixing device (1) according to claim 1, wherein said ring holder (11) comprises legs (112) and said pusher (12) comprises recesses or apertures (122) configured to receive said legs (112).

3. Fixing device (1) according to any of the preceding claims, wherein said pusher (12) comprises ribs (123) and said ring holder (11) comprises apertures (113) configured to receive said ribs (123).

4. Fixing device (1) according to any of the preceding claims, wherein said pusher (12) has an external diameter (D) that is greater than the internal diameter (d) of said expandable ring (10) when said expandable ring (10) is at rest.

5. Fixing device (1) according to any of the preceding claims, wherein said pusher (12) comprises a rib (123) configured to push onto said expandable ring (10) when the pusher (12) is in said second position (p2).

6. Fixing device (1) according to any of the preceding claims, wherein said pusher (12) comprises a hole (121) configured to receive a screw (22).

7. Fixing device (1) according to claim 6, wherein said expandable ring (10) further comprises a slot (102) that allows the expandable ring (10) to expand.

8. Lighting device (3) for a vehicle (2), said lighting device (3) comprising :
- a housing (30),
- a fixing leg (31) that extends from said housing (30), said fixing leg (31) comprising a hole (31.1), and
- a fixing device (1) as claimed in any of the preceding claims that is inserted into said hole (31.1), wherein said lighting device (3) is configured to be fixed to a body (20) of said vehicle (2) by means of a screw (22) that is configured to cooperate with a nut (23), and to be hold into position by means of said fixing device (1).

9. Lighting device (3) according to the preceding claim, wherein the hole (31.1) of said leg (31) comprises an internal surface (31.10) arranged in a direction parallel to an axis (A-A') along which the fixing device (1) extends.

10. Vehicle (2) with a body (20) and a screw (22) attached to said body (20), wherein said vehicle (2) comprises a lighting device (3) as claimed in claim 8 or claim 9.

11. Mounting method (PR) for fixing a lighting device (3) to a body (20) of a vehicle (2), said lighting device (3) comprising a fixing device (1) as claimed in any of the claims 1 to 7, wherein said mounting device (PR) comprises :
- assembling the expandable ring (10) and the ring holder (11) to a housing (30) of said lighting device (3), said expandable ring (10) being positioned around said ring holder (11),
- assembling the pusher (12) to the assembly comprising the expandable ring (10) and the ring holder (11),
- inserting (E3) a screw (22) attached to said vehicle's body (20) into a hole (120) of the pusher (12),
- moving (E4) the housing (30) of said lighting device (3) relatively to the vehicle's body (20) so as to obtain a desired gap (f) between a front surface (32) of said lighting device (3) and an outer surface (200) said vehicle's body (20),
- positioning (E5) a nut (23) on top of the pusher (12) and screwing said nut (23) onto said screw (22) so that the pusher (12) pushes onto said expandable ring (10) in order to increase the internal diameter (d) of said expandable ring (10) and so as to block the lighting device (3) into position.
